# EUROPEAN PATENT APPLICATION

(11) **EP 4 668 877 A1**
(43) Date of publication of application: **24.12.2025**
(21) Application number: 23921990.0
(22) Date of filing: 17.02.2023
(51) Int. Cl.: H04W 52/02

(54) **INFORMATION INDICATION METHOD AND APPARATUS, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); HE, Chuanfeng, Dongguan, Guangdong 523860 (CN); XU, Weijie, Dongguan, Guangdong 523860 (CN)
(74) Representative: Penza, Giancarlo
(86) International application number: PCT/CN2023/076869
(87) International publication number: WO 2024/168844

(57) **Abstract**

Provided in the embodiments of the present application are an information indication method and apparatus, and a communication device. The method comprises: a first device receiving an uplink signal, which is sent by a second device, wherein the uplink signal carries first information, and the first information is used for indicating related information for performing uplink transmission by the second device and/or related information for performing downlink transmission by the first device; and the second device is a communication device based on ambient energy.

## Description

### TECHNICAL FIELD

Embodiments of this application relate to the technical field of mobile communication, in particular to a method and apparatus for information indication, and a communication device.

### BACKGROUND

The energy required to operate an ambient energy-based communication device is mainly sourced from the ambient. Such communication device may only perform signal transmission with a peer device after harvesting sufficient energy. Therefore, the signal transmission between such communication device and the peer device is constrained, resulting in it unsuitable for frequent signal transmission with the peer device. How to manage the signal transmission of the ambient energy-based communication device to ensure effective communication is a problem that needs to be solved.

### SUMMARY

Embodiments of the disclosure provide a method and apparatus for information indication, a communication device, a chip, a computer-readable storage medium, a computer program product, and a computer program.

The method for information indication provided by an embodiment of the disclosure includes the following operation.

A first device receives an uplink signal from a second device. The uplink signal carries first information, the first information indicates related information of uplink transmission performed by the second device and/or related information of downlink transmission performed by the first device, and the second device is an ambient communication device.

The method for information indication provided by an embodiment of the disclosure includes the following operation.

A second device sends an uplink signal to a first device. The uplink signal carries first information, the first information indicates related information of uplink transmission performed by the second device and/or related information of downlink transmission performed by the first device, and the second device is an ambient communication device.

The apparatus for information indication provided by an embodiment of the disclosure is applied to a first device, and the apparatus includes a receiving unit.

The receiving unit is configured to receive an uplink signal from a second device. The uplink signal carries first information, the first information indicates related information of uplink transmission performed by the second device and/or related information of downlink transmission performed by the first device, and the second device is an ambient communication device.

The apparatus for information indication provided by an embodiment of the disclosure is applied to a second device, and the apparatus includes a sending unit.

The sending unit is configured to send an uplink signal to a first device. The uplink signal carries first information, the first information indicates related information of uplink transmission performed by the second device and/or related information of downlink transmission performed by the first device, and the second device is an ambient communication device.

The communication device provided by an embodiment of the disclosure includes a processor and a memory. The memory is used to store a computer program, and the processor is configured to invoke and execute the computer program stored in the memory to perform the method for information indication described above.

The chip provided by an embodiment of the disclosure is used to perform the method for information indication described above.

Specifically, the chip includes a processor configured to invoke and execute a computer program from a memory to cause a device in which the chip is installed to perform the method for information indication described above.

The computer-readable storage medium provided by an embodiment of the disclosure is for storing a computer program that causes a computer to perform the method for information indication described above.

The computer program product provided by an embodiment of the disclosure includes computer program instructions that cause a computer to perform the method for information indication described above.

The computer program provided by an embodiment of the disclosure, when executed by a computer, causes the computer to perform the method for information indication described above.

With the technical solutions described above, the second device, as an ambient communication device, provides first information to the first device, and the first information indicates related information of uplink transmission performed by the second device and/or related information of downlink transmission performed by the first device, so that the first device can be assisted in triggering the second device to perform effective uplink transmission, and the first device can also be assisted in performing effective downlink transmission, thereby achieving the purpose of effective communication between the first device and the second device.

### BRIEF DESCRIPTION OF THE DRAWINGS

The accompanying drawings illustrated herein are intended to provide a further understanding of the disclosure and form part of the disclosure. The schematic embodiments of the disclosure and their description are intended to explain the disclosure, and do not constitute an unduly limitation of the disclosure. In the accompanying drawings:
FIG. 1 is an architecture diagram of a communication system applied in an embodiment of the disclosure.
FIG. 2 is an architecture diagram of another communication system applied in an embodiment of the disclosure.
FIG. 3 is a schematic flowchart of information indication according to an embodiment of the disclosure.
FIG. 4 is a schematic diagram of transmission sequence of the trigger signal and the uplink signal according to an embodiment of the disclosure.
FIG. 5 is a schematic diagram of a beam covered by an access point (AP) according to an embodiment of the disclosure.
FIG. 6 is a first schematic diagram of the compositional structure of an apparatus for information indication according to an embodiment of the disclosure.
FIG. 7 is a second schematic diagram of the compositional structure of the apparatus for information indication according to an embodiment of the disclosure.
FIG. 8 is a schematic structural diagram of a communication device according to an embodiment of the disclosure.
FIG. 9 is a schematic structural diagram of a chip according to an embodiment of the disclosure.
FIG. 10 is a schematic block diagram of a communication system according to an embodiment of the disclosure.

### DETAILED DESCRIPTION

The technical solutions in the embodiments of the disclosure will be described below with reference to the accompanying drawings in the embodiments of the disclosure. It will be apparent that the described embodiments herein are only part of but not all of the embodiments in the disclosure. Based on the embodiments in the disclosure, all other embodiments obtained by those of ordinary skilled in the art without making any creative effort fall within the scope of protection of the disclosure.

The technical solutions in embodiments of the disclosure may be applied to various communication systems, such as wireless fidelit (WiFi) systems, 3rd generation partnership project (3GPP) systems, etc.

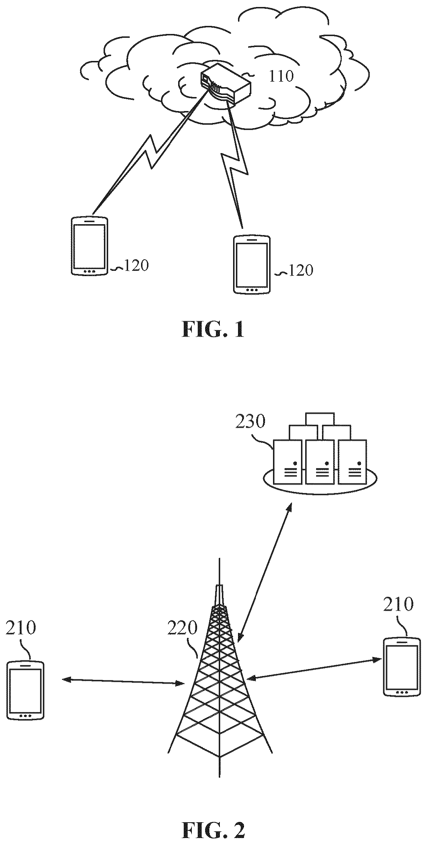

FIG. 1 is an exemplary architecture of a communication system applied in an embodiment of the disclosure.

As illustrated in FIG. 1, the communication system may include an access point (AP) 110, and a station (STA) 120 that accesses the network through the AP 110. In some scenarios, the AP 110 may be referred to as an AP STA, that is, the AP 110 is also a STA in a sense. In some scenarios, the STA 120 may be referred to as a non-AP STA. In some scenarios, the STA 120 may include an AP STA and a non-AP STA. Communication in the communication system may include: communication between the AP 110 and the STA 120, communication between the STA 120 and another STA 120, or communication between the STA 120 and a peer STA. Here, the peer STA refers to a device that communicates with a peer of the STA 120, for example, the peer STA may be an AP or a non-AP STA.

The AP 110 may serve as a bridge connecting a wired network and a wireless network, and its primary function is to link various wireless network clients together, and then integrate the wireless network into the Ethernet. The AP 110 may be a terminal device (such as a mobile phone) or a network device (such as a router) with a WiFi chip.

It should be noted that, the role of the STA 120 in the communication system is not absolute. That is to say, the role of STA 120 in the communication system may be switched between the AP and the STA. For example, in some scenarios, when a mobile phone is connected to a router, the mobile phone acts as an STA, and when a mobile phone serves as a hotspot for another mobile phone, the mobile phone acts as an AP.

In some embodiments, the AP 110 and the STA 120 may be devices applied in the internet of vehicles, internet of things (IoT) nodes, sensors and the like in the internet of things (IoT), smart cameras, smart remote controls, smart water/electricity meters and the like in smart homes, as well as sensors and the like in smart cities.

In some embodiments, the AP 110 may be a device that supports the 802.11be standard. The AP may also be a device that supports various current and future WLAN standards from the 802.11 family, including 802.11ax, 802.11ac, 802.11n, 802.11g, 802.11b, and 802.11a. In some embodiments, the STA 120 may support the 802.11be standard. The STA may also support various current and future WLAN standards from the 802.11 family, including 802.11ax, 802.11ac, 802.11n, 802.11g, 802.11b, and 802.11a.

In some embodiments, the AP 110 and/or the STA 120 may be deployed on land, including indoor or outdoor, handheld, wearable or vehicle-mounted. The AP 110 and/or the STA 120 may also be deployed on the water (such as on ships). The AP 110 and/or the STA 120 may also be deployed in the air (e.g. on aircraft, balloons, satellites, etc.).

In some embodiments, the STA 120 may be a device that supports WLAN/WiFi technology, such as a mobile phone, a Pad, a computer with a wireless transceiver function, a virtual reality (VR) device, or an augmented reality (AR) device, a wireless device in industrial control, a set-top box, a wireless device or a vehicle-mounted communication device in self driving, a wireless terminal device in remote medical, a wireless device in smart grid, a wireless device in transportation safety, a wireless device in smart city, a wireless device in smart home, a vehicle-mounted communication device, a wireless communication chip/an application specific integrated circuit (ASIC)/a system on chip (SoC), and the like.

Exemplary, the STA 120 may also be a wearable device. The wearable device may also be referred to as a wearable smart device, which is a general term of wearable devices that are intelligently designed and developed by applying wearable technologies to daily wear, such as glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. Generalized wearable smart devices have full functions and large size, and may realize complete or partial functions without relying on smart phones, such as smart watches or smart glasses, as well as those that only focus on a certain type of application functions and need to be used in conjunction with other devices such as smart phones, such as various smart bracelets and smart jewelry for physical sign monitoring.

It is to be understood that FIG. 1 is only an example of the disclosure, and should not be construed as a limitation of the disclosure. For example, FIG. 1 only exemplifies one AP and two STAs. In some embodiments, the communication system may include multiple APs as well as another number of STAs, which is not limited in the embodiment of the disclosure.

FIG. 2 is example architecture of another communication system applied in an embodiment of the disclosure.

As illustrated in FIG. 2, the communication system may include a terminal device 210 and a network device 220. The network device 220 may communicate with the terminal device 210 through an air interface. Multi-service transmission is supported between the terminal device 210 and the network device 220.

It is to be understood that the technical solutions of the embodiment of the disclosure may be applied to various communication systems, such as an Internet of things (IoT) system, a narrow band Internet of things (NB-IoT) system, an enhanced machine-type communications (eMTC) system, a 5G communication system (also referred to as a new radio (NR) communication system), or future communication systems, etc.

In the communication system illustrated in FIG. 1, the network device 220 may be an access network device that communicates with the terminal device 210. The access network device may provide communication coverage for a particular geographic area and perform communication with the terminal device 210 (e.g., UE) within that coverage area.

The network device 220 may be a next generation radio access network (NG RAN) device, or a base station (gNB) in an NR system, or a wireless controller in a cloud radio access network (CRAN). Alternatively, the network device 220 may be a relay station, an access point, an in-vehicle device, a wearable device, a hub, a switch, a bridge, a router, or a network device in a future evolved public land mobile network (PLMN), etc.

The terminal device 210 may be any terminal device including, but not limited to, a terminal device connected to the network device 220 or other terminal devices via wired or wireless connections.

For example, the terminal device 210 may refer to an access terminal, user equipment (UE), a subscriber unit, a subscriber station, a mobile site, a mobile station, a remote station, a remote terminal, a mobile device, a user terminal, a terminal, a wireless communication device, a user agent or a user device. The access terminal may be a cellular telephone, a cordless telephone, a session initiation protocol (SIP) telephone, an IoT device, a satellite handheld terminal, a wireless local loop (WLL) station, a personal digital assistant (PDA) device, a handheld device with wireless communication capabilities, a computing device or other processing device connected to a wireless modem, an in-vehicle device, a wearable device, a terminal device in a 5G network, or a terminal device in a future evolved network.

The terminal device 210 may be used for device to device (D2D) communication.

The wireless communication system may further include a core network device 230 that performs communication with the base station. The core network device 230 may be a 5G core (5GC) device, such as an access and mobility management function (AMF), or an authentication server function (AUSF), or a user plane function (UPF), or session management function (SMF). Optionally, the core network device 130 may also be an evolved packet core (EPC) device of an LTE network, such as a session management function + core packet gateway (SMF + PGW-C) device. It is to be understood that the SMF + PGW-C may simultaneously implement functions that can be achieved by both the SMF and the PGW-C. In the process of network evolution, the above-mentioned core network device may also be referred to by other names, or a new network entity may be formed by partitioning the functions of the core network, which is not limited in the embodiments of the disclosure.

FIG. 2 exemplifies one base station, one core network device, and two terminal devices. Optionally, the wireless communication system may include multiple base stations, and the coverage of each base station may include another number of terminal devices, which is not limited in the embodiments of the disclosure.

It is to be noted that, FIG. 1 and FIG. 2 illustrate, by way of example only, the system to which the disclosure is applicable, although the method illustrated in the embodiments of the disclosure may also be applied to other systems. Furthermore, the terms "system" and "network" are generally used interchangeably herein. In this context, the term "and/or" merely indicates an association relationship for describing associated objects, and represents that there are three kinds of relationships. For example, "A and/or B" may represent three situations, i.e., independent existence of A, existence of both A and B, and independent existence of B. Additionally, the character "/" herein generally represents that the previous and next objects form a kind of "or" relationship. It is also to be understood that "indicate/indication" mentioned in the embodiments of the disclosure may be a direct indication, or may be an indirect indication, or may represent that there is an association relationship. For example, "A indicates B", may represent that A indicates B directly, for example, B may be obtained through A; or, it may represent A indicate B indirectly, for example, A indicates C, and B may be obtained through C; or it may represent that there is an association relationship between A and B. It is also to be understood that "correspond/correspondence" mentioned in the embodiment of the disclosure may represent that there is a direct or indirect correspondence between the two objects; or, it may represent that there is an association relationship between two objects; or, it may be a relationship such as indicating and being indicated, configuring and being configured, etc. It is also to be understood that "predefined/predefinition" or "predefined rule" referred to in the embodiments of the disclosure may be implemented by storing corresponding codes, tables, or other means which may be used to indicate relevant information in advance within a device (including, for example, a terminal device and a network device), the specific implementation thereof are not be limited in the disclosure. For example, "predefined" may be "defined in a protocol". It is also to be understood that, in an embodiment of the disclosure, the "protocol" may be a standard protocol in the communication field, and may include, for example, an LTE protocol, an NR protocol, and relevant protocols applied to future communication systems, which are not limited in the disclosure.

In order to facilitate the understanding of technical solutions in the embodiments of the disclosure, the related technologies of the embodiments of the disclosure will be elaborated below. The following related technologies, as optional solutions, may be arbitrarily combined with the technical solutions in the embodiments of the disclosure, all of which belong to the scope of protection of the embodiments of the disclosure.

The zero power communication adopts power harvesting and backscatter communication technologies. The zero power communication system includes a network device and a zero power terminal. The network device is configured to send power supplying signals and downlink communication signals to the zero power terminal, and receive back scattering signals from the zero power terminal. As an example, the zero power terminal includes a power harvesting module, a back scattering communication module, and a low power computing module. In addition, the zero power terminal may also be provided with a memory and/or a sensor, the memory is used to store some basic information (such as item identifier, etc.), and the sensor is used to acquire sensed data such as ambient temperature, ambient humidity, etc.

Based on the energy sources and usage manners of the zero power terminals, the zero power terminals may be classified into the following types.

### (1) Passive zero power terminal

The zero power terminal does not require a built-in battery. When the zero power terminal approaches the network device, the zero power terminal is in the near-field range formed by the antenna radiation of the network device. Therefore, the antenna of the zero power terminal generates induced current through electromagnetic induction, and the induced current drives the low power computing module (i.e., the low power chip circuit) of the zero power terminal to operate, thereby realizing the demodulation of the forward link signals and the modulation of the backward link signals. For the back scattering link, the zero power terminal uses the back scattering implementation for signal transmission.

It can be seen that the passive zero power terminal does not require a built-in battery to drive either the forward link or the backward link, and thus, it is an absolute zero power terminal.

Since the passive zero power terminal does not require batteries, the radio frequency (RF) circuit and the baseband circuit of the passive zero power terminal are very simple. For example, the passive zero power terminal does not require a low noise amplifier (LNA), power amplifier (PA), crystal oscillator, analog-to-digital converter (ADC), etc., and thus has many advantages such as a small size, a light weight, a low price and a long service life, etc.

### (2) Semi-passive zero power terminal

The semi-passive zero power terminal itself is not equipped with a conventional battery, but it may use the power harvesting module to harvest energy of radio waves and store the harvested energy in an energy storage unit (such as a capacitor). After obtaining energy, the energy storage unit may drive the low power computing module (i.e., the low power chip circuit) of the zero power terminal to operate, thereby realizing the demodulation of the forward link signal and the modulation of the backward link signal. For the backscatter link, the zero power terminal uses the back scattering implementation for signal transmission.

It can be seen that the semi-passive zero power terminal does not require a built-in battery to drive either the forward link or the backward link. Although the energy stored in the capacitor is used in the operation, the energy comes from the energy of radio waves harvested by the power harvesting module, and thus, the semi-passive zero power terminal is also a real zero power terminal.

The semi-passive zero power terminal inherits many advantages of the passive zero power terminal, and thus has many advantages such as a small size, a light weight, a low price and a long service life, etc.

### (3) Active zero power terminal

The zero power terminal used in some scenarios may also be an active zero power terminal, which has a built-in battery. The battery is used to drive the low power computing module (i.e., the low power chip circuit) of the zero power terminal, thereby realizing the demodulation of the forward link signal and the modulation of the backward link signal. However, for the back scattering link, the zero power terminal uses the back scattering implementation for signal transmission. Therefore, the zero power of this type of terminal is mainly reflected in the fact that the signal transmission of the back scattering link does not require power from the terminal itself, but instead uses the back scattering manner.

The active zero power terminal has the built-in battery to supply power to radio frequency chip, thereby increasing communication distance and improving communication reliability. Therefore, it may be applied in some scenarios that have relatively high requirements in terms of communication distance and communication time-delay.

With the increase of industry applications, the types and application scenarios of connected objects become more and more diverse, and there will be higher requirements in terms of the cost and power consumption of communication devices. The application of battery-free and low-cost IoT devices has become a key technology of cellular IoT, thereby enriching the types and quantities of network-linked terminals and truly realizing the Interconnection of Everything. The IoT device may be based on zero power communication technologies, such as radio frequency identification (RFID) technology, and extend on this basis to be suitable for cellular IoT.

The energy of passive IoT devices may be sourced from the ambient, and such devices are referred to as ambient IoT (ambient powered, AMP, IoT) devices. The energy required for the operation of such devices is sourced from ambient energy harvesting, and the source of ambient energy may be wireless signals, solar energy, thermal energy, etc. The passive zero power terminal or semi-passive zero power terminal in zero power communication is a typical passive IoT device.

For an AMP IoT device, it's communication with a peer device (such as the network device) is often limited by the energy harvesting status of the AMP IoT device, and thus the AMP IoT device is not suitable for frequent message transmission with the peer device. For example, after an uplink transmission is performed, the AMP IoT device needs to wait for a period of time for energy harvesting before performing a next uplink transmission. How to effectively trigger the AMP IoT device to perform an uplink transmission and/or how to effectively perform a downlink transmission to the AMP IoT device is a problem that needs to be solved. The following technical solutions in embodiments of the disclosure are therefore provided.

In order to facilitate the understanding of technical solutions in the embodiments of the disclosure, the technical solutions in the disclosure are described in detail by way of specific embodiments below. The above related technologies, as alternatives, may be arbitrarily combined with the technical solutions in the embodiments of the disclosure, all of which belong to the scope of protection of the embodiments of the disclosure. The embodiments of the disclosure include at least some of the following contents

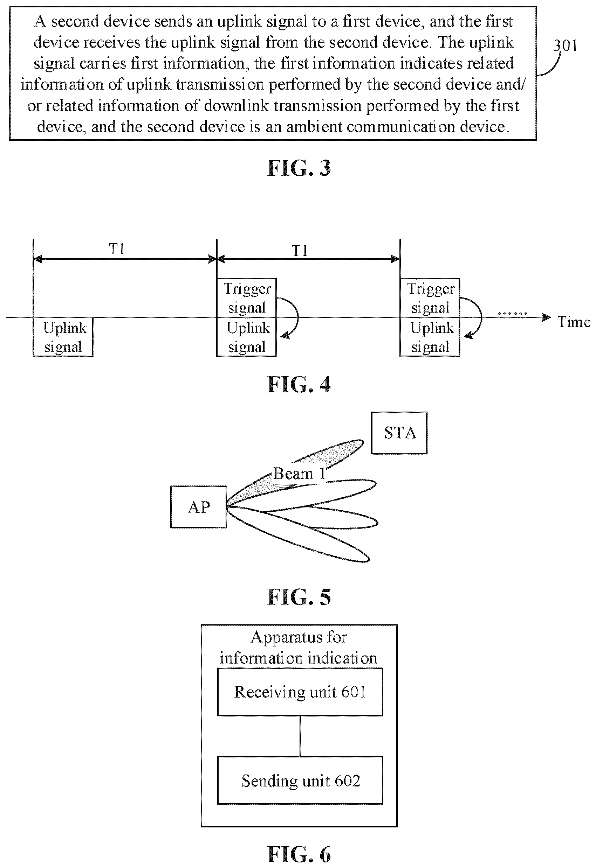

FIG. 3 is a schematic flowchart of information indication provided by an embodiment of the disclosure. As illustrated in FIG. 3, the information indication includes the following operation.

In operation 301, a second device sends an uplink signal to a first device, and the first device receives an uplink signal from the second device. The uplink signal carries first information, the first information indicates related information of uplink transmission performed by the second device and/or related information of downlink transmission performed by the first device, and the second device is an ambient communication device.

In some implementations, the first device is an AP and the second device is an STA. The architecture of the communication system including the first device and the second device is illustrated with reference to FIG. 1.

In some implementations, the first device is a network device, and the second device is a terminal device. The architecture of the communication system including the first device and the second device is illustrated with reference to FIG. 2.

In an embodiment of the disclosure, the second device is an ambient energy-based communication device, such as an AMP IoT device, and ambient energy may include following types: wireless signals, solar energy, thermal energy, etc. In some implementations, the second device may also be a zero power terminal, or a terminal that supports back scattering communication.

In the embodiment of the disclosure, in an uplink transmission, the second device indicates related information of uplink transmission performed by the second device and/or related information of downlink transmission performed by the first device by carrying the first information in the uplink signal.

In some implementations, the uplink signal may be an uplink frame in a WiFi system. Alternatively, the uplink signal may be an uplink signal in a 3GPP system.

In some implementations, the first information is carried in a media access control (MAC) header or a physical layer protocol data unit (PPDU) header or a media access control control element (MAC CE) of the uplink signal.

In some embodiments, the first information includes at least one of: first indication information, second indication information, third indication information, fourth indication information or fifth indication information.

The first indication information is for indicating a first time interval. The first time interval is a time interval between a timing of a next uplink transmission performed by the second device and a timing of a current uplink transmission performed by the second device, or the first time interval is a time interval between a timing of sending a next trigger signal by the first device and a timing of sending a current trigger signal by the first device, and the trigger signal is used to trigger an uplink transmission of the second device.

The second indication information is for indicating that the second device has entered a sleep state and/or has not entered a sleep state.

The third indication information is for indicating that the second device has an uplink transmission to be sent and/or has no uplink transmission to be sent.

The fourth indication information is used to request an energy supply signal.

The fifth indication information is for indicating first orientation information. The first orientation information is orientation information where the second device is located and/or orientation information of the first device when performing a downlink transmission to the second device.

Herein, the value of the first time interval indicated by the first indication information is usually a non-zero value. Optionally, the value of the first time interval may have a special value, such as 0, indicating that the second device has entered a sleep state or the second device has no uplink transmission to be sent.

Herein, two indication modes of the second indication information exist. Option 1), the second indication information has only one candidate value indicating that the second device has entered the sleep state. In this case, when the uplink signal carries the second indication information, it is indicated that the second device has entered the sleep state; otherwise, it is indicated that the second device has not entered the sleep state. Option 2), the second indication information has two candidate values, in which a first value (such as 1 or 0) is for indicating that the second device has entered the sleep state, and a second value (such as 0 or 1) is for indicating that the second device has not entered the sleep state. In this case, it is determined whether the second device has entered the sleep state based on the value of the second indication information. The second indication information may have another name, such as sleep indication information, which is not limited in the embodiments of the disclosure.

Herein, two indication modes of the third indication information exist. Option 1), the third indication information has only one candidate value indicating that the second device has an uplink transmission to be sent. In this case, when the uplink signal carries the third indication information, it is indicated that the second device has an uplink transmission to be sent; otherwise, it is indicated that the second device has no uplink transmission to be sent. Option 2), the third indication information has two candidate values, in which a first value (such as 1 or 0) is for indicating that the second device has an uplink transmission to be sent, and a second value (such as 0 or 1) is for indicating that the second device has no uplink transmission to be sent. In this case, it is determined whether the second device has no uplink transmission to be sent based on the value of the third indication information.

Herein, indication mode of the fourth indication information may be that the fourth indication information has only one candidate value indicating that an energy supply signal is requested. In this case, when the uplink signal carries the fourth indication information, it is indicated that the second device requests the first device to send the energy supply signal; otherwise, it is indicated that the second device does not request the first device to send the energy supply signal. The fourth indication information may have another name, such as energy supply request indication information, which is not limited in the embodiments of the disclosure.

It should be noted that, "indicating that the second device has entered the sleep state" may also be understood as "indicating that the second device has no uplink transmission to be sent". Similarly, "indicating that the second device has not entered the sleep state" may also be understood as "indicating that the second device has an uplink transmission to be sent".

In embodiment of the disclosure, after receiving the uplink signal from the second device, the first device may trigger the second device to perform uplink transmission and/or perform downlink transmission to the second device based on the indication information carried in the uplink signal.

The uplink transmission of the second device may be that the second device sends uplink data. The downlink transmission performed by the first device may be that the first device sends a trigger signal, or the first device sends an energy supply signal, or the like.

In some implementations, a time duration corresponding to the first time interval is a time duration of a first timer. The first device starts the first timer after acquiring the first indication information, and the first device sends a trigger signal to the second device after the first timer expires.

As an example, as illustrated in FIG. 4, the first time interval is T1. The first device starts the first timer after receiving an uplink signal, and the first device sends a trigger signal after the first timer expires (that is, after time duration T1). Herein, the trigger signal is used to trigger the second device to perform a next uplink transmission. By analogy, the first device starts the first timer after receiving an uplink signal next time, and the first device sends again a trigger signal after the first timer expires (that is, after time duration T1). Herein, the trigger signal is used to trigger the second device to perform a subsequent uplink transmission.

In some implementations, after the first timer expires, and when the second indication information indicates that the second device has not entered the sleep state and/or the third indication information indicates that the second device has an uplink transmission to be sent, the first device sends the trigger signal to the second device.

In some implementations, after acquiring the fourth indication information, the first device sends the energy supply signal, or the first device triggers the third device to send the energy supply signal. The energy supply signal is used to supply energy to the second device.

In some implementations, the first device sends a downlink signal to the second device based on the first orientation information indicated by the fifth indication information. Herein, the downlink signal includes at least one of: a trigger signal, an energy supply signal, or downlink data.

In some implementations, the second device may acquire the first orientation information in the following manner: the first device sends the first frame, the second device receives the first frame from the first device, and the first frame carries orientation information corresponding to a transmission direction of the first frame. The second device determines the first orientation information based on the orientation information corresponding to the transmission direction of the first frame. As an example, the first frame is a beacon frame.

In the above solution, the orientation information may be a beam index. As an example, as illustrated in FIG. 5, the first device is an AP, the second device is an STA, and the AP sends the beacon frame by way of beam scanning. Taking beam 1 as an example, the AP carries the index of the beam 1 in the beacon frame transmitted in the beam 1, and the same applies to other beams, and the AP carries the index of beam n in the beacon frame transmitted in the beam n. The STA is located in the coverage range of the beam 1. The STA may obtain the index of the beam 1 (that is, the first orientation information) from the received beacon frame, and provides the index of the beam 1 to the AP through an uplink signal, so that the AP may determine the orientation of the STA, and perform downlink transmission to the STA in the beam 1 when performing a downlink transmission to the STA.

The technical solutions in the embodiments of the disclosure are exemplified in combination with specific application example below. The application example does not limit the scope of the technical solutions in the embodiments of the disclosure.

### Application Example

This application example takes a WiFi system as an example. Herein, the first device is an AP, and the second device is an STA (that is, the AMP IoT device).

The data packets transmitted by the STA may be large or small. There are scenarios where one data packet requires multiple transmissions or multiple data packets require to be sent. At the same time, there is also a scenario where one data packet is transmitted at one time. After an uplink transmission performed by the STA is completed, and when there is still data to be sent, the AP needs to wait for a period of time before triggering the STA to perform a next uplink transmission. The waiting time of the AP is the time during which the STA harvests energy for the next uplink transmission. Different types of STAs employ distinct energy harvesting methods, resulting in different time requirements to achieve sufficient energy storage for uplink transmission. Therefore, the STA needs to inform the AP the minimum time interval for performing the uplink transmission again. In addition, when the STA has transmitted complete data to the AP, the STA also needs to inform the AP that there is no data to be sent. To this end, the AP may include at least one piece of indication information in the uplink signal of an uplink transmission, as shown below.

The first indication information is for indicating a time interval (which may be a minimum time interval). The time interval is a time interval between a timing of a next uplink transmission performed by the STA and a timing of a current uplink transmission performed by the STA, or the time interval is a time interval between a timing of sending a next trigger signal by the AP and a timing of sending a current trigger signal by the AP.

The second indication information is for indicating that the STA has entered a sleep state and/or has not entered a sleep state.

The third indication information is for indicating that the STA has an uplink transmission to be sent and/or has no uplink transmission to be sent.

The fourth indication information is used to request an energy supply signal.

The fifth indication information is for indicating orientation information where the STA is located and/or orientation information of the AP when performing a downlink transmission to the STA, such as a beam index.

The at least one piece of indication information described above may be carried in a MAC header, a PPDU header, or a MAC CE of the uplink signal.

After the AP receives the first indication information from the STA, and when the time interval information is not 0, the AP starts the timer (a time duration of starting the timer is equal to a time duration of the time interval). The AP sends a trigger signal to the STA again after the timer expires, to trigger the uplink data transmission of the STA. Alternatively, after the AP receives the first indication information and the second indication information from the STA, and when the time interval information is not 0, the AP starts the timer (a time duration of starting the timer is equal to a time duration of the time interval). After the timer expires and the STA has not entered the sleep state, the AP sends a trigger signal to the STA again to trigger the uplink data transmission of the STA. Alternatively, after the AP receives the first indication information and the third indication information from the STA, and when the time interval information is not 0, the AP starts the timer (a time duration of starting the timer is equal to a time duration of the time interval). After the timer expires and when the STA has uplink data to be sent, the AP sends a trigger signal to the STA again to trigger the uplink data transmission of the STA.

After the AP receives the fourth indication information from the STA, the AP sends the energy supply signal to the STA, or the AP triggers other devices to send the energy supply signal to the STA.

After the AP receives the fifth indication information from the STA, the AP sends a downlink signal, such as a trigger signal, an energy supply signal, or the like, in the orientation indicated by the fifth indication information.

With the technical solutions in the embodiments of the disclosure, in an aspect, the ambient energy-based communication device provides a time interval to the first device, enabling the first device to effectively trigger uplink transmission performed by the communication device. In another aspect, the ambient energy-based communication device informs the first device whether the ambient energy-based communication device has data to be sent, enabling the first device to have a basis for triggering the data reporting of the communication device. In a further aspect, the ambient energy-based communication device provides an energy supply request to the first device, enabling effective transmission of an energy supply signal by the first device. In a still another aspect, the ambient energy-based communication device provides orientation information to the first device, enabling targeted downlink transmission by the first device, thereby achieving energy saving of the first device while improving downlink transmission reliability.

The preferred implementations of the disclosure have been described in detail as above with reference to the accompanying drawings. However, the disclosure is not limited to the specific details in the above implementations. Within the scope of the technical concept of the disclosure, various simple modifications may be made to the technical solutions of the disclosure, and all these simple modifications belong to the scope of protection of the disclosure. For example, various specific technical features described in the above specific implementations may be combined in any suitable manner without contradiction. In order to avoid unnecessary repetition, various possible combination manners will not be described any more in the disclosure. For another example, various different implementations of the disclosure may also be combined arbitrarily, as long as they do not depart from the idea of the disclosure, which should also be considered as the contents disclosed in the disclosure. For another example, provided that there is no conflict, the embodiments and/or technical features within the embodiments described in the disclosure may be arbitrarily combined with related art. The technical solutions obtained after the combination should also fall within the scope of protection of the disclosure.

It should further be understood that, in various method embodiments of the disclosure, the values of the sequence numbers of the aforementioned processes do not imply the sequence of execution. The sequence of execution of the processes should be determined based on functions thereof and inherent logics, and the values of the sequence numbers should not constitute any limitation on the implementation processes of the embodiments of the disclosure. Furthermore, in the embodiments of the disclosure, each of the terms "downlink", "uplink" and "sidelink" are used to represent a transmission direction of a signal or data. Herein, the "downlink" is used to represent that the transmission direction of the signal or data is a first direction sent from a station to a user equipment of a cell; the "uplink" is used to represent that the transmission direction of the signal or data is a second direction sent from the user equipment of the cell to the station; and the "sidelink" is used to represent that the transmission direction of the signal or data is a third direction sent from a user equipment 1 to a user equipment 2. For example, a "downlink signal" represents that the signal is sent in the first direction. In addition, in the embodiments of the disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. Additionally, the character "/" herein generally represents that the previous and next objects form a kind of "or" relationship.

FIG. 6 is a first schematic diagram of the compositional structure of the apparatus for information indication according to an embodiment of the disclosure, and the apparatus for information indication is applied to a first device. As illustrated in FIG. 6, the apparatus for information indication includes a receiving unit 601.

The receiving unit 601 is configured to receive an uplink signal from a second device. The uplink signal carries first information, the first information indicates related information of uplink transmission performed by the second device and/or related information of downlink transmission performed by the first device, and the second device is an ambient communication device.

In some embodiments, the first information includes at least one of: first indication information, second indication information, third indication information, fourth indication information or fifth indication information.

The first indication information is for indicating a first time interval. The first time interval is a time interval between a timing of a next uplink transmission performed by the second device and a timing of a current uplink transmission performed by the second device, or the first time interval is a time interval between a timing of sending a next trigger signal by the first device and a timing of sending a current trigger signal by the first device, and the trigger signal is used to trigger an uplink transmission of the second device.

The second indication information is for indicating that the second device has entered a sleep state and/or has not entered a sleep state.

The third indication information is for indicating that the second device has an uplink transmission to be sent and/or has no uplink transmission to be sent.

The fourth indication information is used to request an energy supply signal.

The fifth indication information is for indicating first orientation information. The first orientation information is orientation information where the second device is located and/or orientation information of the first device when performing a downlink transmission to the second device.

In some embodiments, a time duration corresponding to the first time interval is a time duration of a first timer. The apparatus further includes a control unit and a sending unit 602.

The control unit is configured to start the first timer after acquiring the first indication information.

The sending unit 602 is configured to send a trigger signal to the second device after the first timer expires.

In some embodiments, the sending unit 602 is specifically configured to send the trigger signal to the second device after the first timer expires and when the second indication information indicates that the second device has not entered the sleep state and/or the third indication information indicates that the second device has an uplink transmission to be sent.

In some implementations, the sending unit 602 is further configured to send the energy supply signal or trigger the third device to send the energy supply signal after acquiring the fourth indication information. The energy supply signal is used to supply energy to the second device.

In some implementations, the sending unit 602 is further configured to send a downlink signal to the second device based on the first orientation information indicated by the fifth indication information.

In some implementations, the downlink signal includes at least one of: a trigger signal, an energy supply signal, or downlink data.

In some implementations, the sending unit 602 is further configured to send a first frame. The first frame carries orientation information corresponding to a transmission direction of the first frame.

In some implementations, the first frame is a beacon frame.

In some implementations, the orientation information is a beam index.

In some implementations, the first information is carried in an MAC header or a PPDU header or an MAC CE of the uplink signal.

In some implementations, the first device is an AP and the second device is an STA. Additionally or alternatively, the first device is a network device and the second device is a terminal device.

It is to be understood by those skilled in the art that the related description of the aforementioned apparatus for information indication in the embodiments of the disclosure may be understood with reference to the related description of the method for information indication in the embodiments of the disclosure.

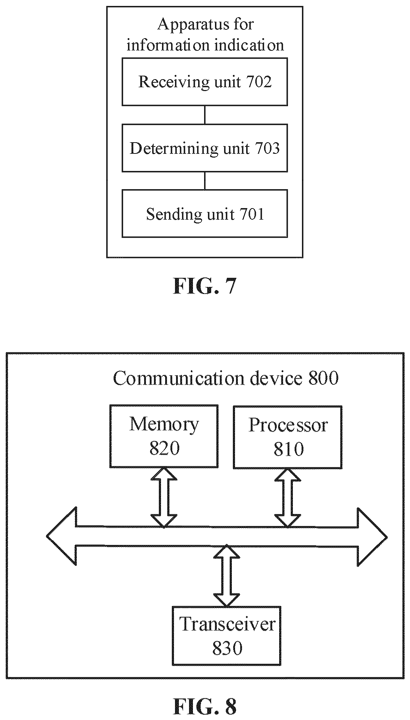

FIG. 7 is a second schematic diagram of the compositional structure of the apparatus for information indication according to an embodiment of the disclosure, and the apparatus for information indication is applied to a second device. As illustrated in FIG. 7, the apparatus for information indication includes a sending unit 701.

The sending unit 701 is configured to send an uplink signal to a first device. The uplink signal carries first information, the first information indicates related information of uplink transmission performed by the second device and/or related information of downlink transmission performed by the first device, and the second device is an ambient communication device.

In some embodiments, the first information includes at least one of: first indication information, second indication information, third indication information, fourth indication information or fifth indication information.

The first indication information is for indicating a first time interval. The first time interval is a time interval between a timing of a next uplink transmission performed by the second device and a timing of a current uplink transmission performed by the second device, or the first time interval is a time interval between a timing of sending a next trigger signal by the first device and a timing of sending a current trigger signal by the first device, and the trigger signal is used to trigger an uplink transmission of the second device.

The second indication information is for indicating that the second device has entered a sleep state and/or has not entered a sleep state.

The third indication information is for indicating that the second device has an uplink transmission to be sent and/or has no uplink transmission to be sent.

The fourth indication information is used to request an energy supply signal.

The fifth indication information is for indicating first orientation information. The first orientation information is orientation information where the second device is located and/or orientation information of the first device when performing a downlink transmission to the second device.

In some embodiments, the apparatus further includes a receiving unit 702 and a determining unit 703.

The receiving unit 702 is configured to receive a first frame from the first device. The first frame carries orientation information corresponding to a transmission direction of the first frame.

The determining unit 703 is configured to determine the first orientation information based on the orientation information corresponding to the transmission direction of the first frame.

In some implementations, the first frame is a beacon frame.

In some implementations, the orientation information is a beam index.

In some implementations, the first information is carried in a MAC header or a PPDU header or a MAC CE of the uplink signal.

In some implementations, the first device is an AP and the second device is an STA. Additionally or alternatively, the first device is a network device and the second device is a terminal device.

It is to be understood by those skilled in the art that the related description of the aforementioned apparatus for information indication in the embodiments of the disclosure may be understood with reference to the related description of the method for information indication in the embodiments of the disclosure.

FIG. 8 is a schematic structural illustration of a communication device 800 according to an embodiment of the disclosure. The communication device may be a first device or a second device. The communication device 800 illustrated in FIG. 8 includes a processor 810 that may call and execute a computer program from a memory to implement each of the methods in the embodiments of the disclosure.

Optionally, as illustrated in FIG. 8, the communication device 800 may further include a memory 820. The processor 810 may call and execute a computer program from the memory 820 to implement each of the methods in the embodiments of the disclosure.

The memory 820 may be a separate device independent of the processor 810, or may be integrated in the processor 810.

Optionally, as illustrated in FIG. 8, the communication device 800 may further include a transceiver 830, and the processor 810 may control the transceiver 830 to communicate with other devices. Specifically, the transceiver may send information or data to other devices, or receive information or data from other devices.

The transceiver 830 may include a transmitter and a receiver. The transceiver 830 may further include one or more antennas.

Optionally, the communication device 800 may be the first device in the embodiments of the disclosure, and the communication device 800 may implement corresponding processes implemented by the first device in each of the methods in the embodiments of the disclosure. For brevity, details will not be repeated herein again.

Optionally, the communication device 800 may be the second device in the embodiments of the disclosure, and the communication device 800 may implement corresponding processes implemented by the second device in each of the methods in the embodiments of the disclosure. For brevity, details will not be repeated herein again.

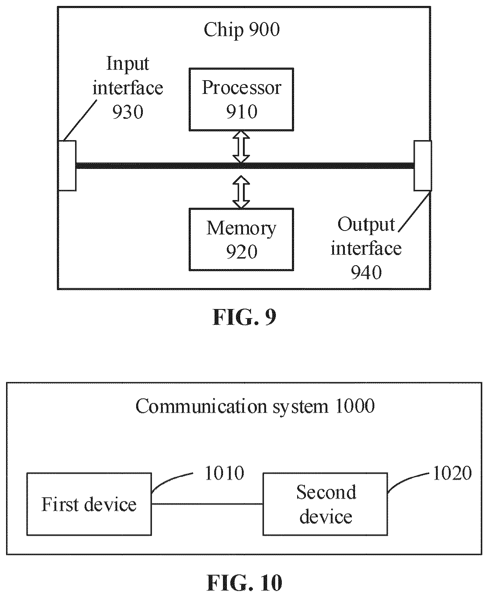

FIG. 9 is a schematic structural illustration of a chip according to an embodiment of the disclosure. The chip 900 illustrated in FIG. 9 includes a processor 910 that may call and execute a computer program from a memory to implement each of the methods in the embodiments of the disclosure.

Optionally, as illustrated in FIG. 9, the chip 900 may further include a memory 920. The processor 910 may call and execute a computer program from the memory 920 to implement each of the methods in the embodiments of the disclosure.

The memory 920 may be a separate device independent of the processor 910, or may be integrated in the processor 910.

Optionally, the chip 900 may further include an input interface 930. The processor 910 may control the input interface 930 to communicate with other devices or chips. Specifically, the input interface 930 may acquire information or data from other devices or chips.

Optionally, the chip 900 may further include an output interface 940. The processor 910 may control the output interface 940 to communicate with other devices or chips. Specifically, the output interface 90 may output information or data to other devices or chips.

Optionally, the chip may be applied to the first device in the embodiments of the disclosure, and the chip may implement corresponding processes implemented by the first device in each of the methods in the embodiments of the disclosure. For brevity, details will not be repeated herein again.

Optionally, the chip may be applied to the second device in the embodiments of the disclosure, and the chip may implement corresponding processes implemented by the second device in each of the methods in the embodiments of the disclosure. For brevity, details will not be repeated herein again.

It should be understood that the chip mentioned in the embodiments of the disclosure may also be referred to as a system-level chip, a system chip, a chip system, or a system-on-chip, etc.

FIG. 10 is a schematic block diagram of a communication system 1000 according to an embodiment of the disclosure. As illustrated in FIG. 10, the communication system 1000 includes a first device 1010 and a second device 1020.

The first device 1010 may be configured to implement the corresponding functions implemented by the first device in the foregoing method, and the second device 1020 may be configured to implement the corresponding functions implemented by the second device in the foregoing method. For brevity, details will not be repeated herein again.

It is to be understood that the processor in the embodiment of the disclosure may be an integrated circuit chip with a signal processing capability. In an implementation process, various operations of the aforementioned method embodiments may be completed by an integrated logic circuit in the form of hardware or the instructions in the form of software in the processor. The processor described above may be a general-purpose processor, a digital signal processor (DSP), an application specific integrated circuit (ASIC), a field programmable gate array (FPGA) or another programmable logic device, discrete gate or transistor logic device, or discrete hardware component. Various methods, operations and logic block diagrams disclosed in the embodiments of the disclosure may be implemented or performed. The general-purpose processor may be a microprocessor, or may be any conventional processor or the like. The operations of the methods disclosed in the embodiments of the disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), or an electrically erasable programmable memory, a register, etc. The storage medium is located in the memory, and the processor reads information in the memory and completes the operations of the foregoing method in combination with its hardware.

It is understood that, in the embodiment of the disclosure, the memory may be a volatile memory or a non-volatile memory, or may include both the volatile memory and the non-volatile memory. The non-volatile memory may be a ROM, a PROM, an Erasable PROM (EPROM), an Electrically EPROM (EEPROM), or a flash memory. The volatile memory may be a RAM, which serves as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM) and a Direct Rambus RAM (DR RAM). It is to be noted that the memory of the systems and methods described herein is intended to include, but not limited to, memories of these and any other suitable types.

It is to be understood that the aforementioned memory is described as an example rather than as a limitation. For example, the memory in the embodiments of the disclosure may further be an SRAM, a DRAM, an SDRAM, a DDR SDRAM, an ESDRAM, an SLDRAM and a DR RAM, etc. That is, the memory in the embodiments of the disclosure is intended to include, but not limited to, memories of these and any other suitable types.

In the embodiments of the disclosure, a computer-readable storage medium having stored thereon a computer program is further provided.

Optionally, the computer-readable storage medium may be applied to the first device in the embodiments of the disclosure, and the computer program is executed to enable a computer to execute corresponding processes implemented by the first device in each of the methods in the embodiments of the disclosure. For brevity, details will not be repeated herein again.

Optionally, the computer-readable storage medium may be applied to the second device in the embodiments of the disclosure, and the computer program is executed to enable the computer to execute corresponding processes implemented by the second device in each of the methods in the embodiments of the disclosure. For brevity, details will not be repeated herein again.

In the embodiment of the disclosure, a computer program product having stored therein computer program instructions is further provided.

Optionally, the computer program product may be applied to the first device in the embodiments of the disclosure, and the computer program instructions cause the computer to execute corresponding processes implemented by the first device in each of the methods in the embodiments of the disclosure. For brevity, details will not be repeated herein again.

Optionally, the computer program product may be applied to the second device in the embodiments of the disclosure, and the computer program instructions cause the computer to execute corresponding processes implemented by the second device in each of methods in the embodiments of the disclosure. For brevity, details will not be repeated herein again.

In the embodiment of the disclosure, a computer program is further provided.

Optionally, the computer program may be applied to the first device in the embodiments of the disclosure. The computer program, when executed by a computer, causes the computer to execute corresponding processes implemented by the first device in each of methods in the embodiments of the disclosure. For brevity, details will not be repeated herein again.

Optionally, the computer program may be applied to the second device in the embodiments of the disclosure. The computer program, when executed by a computer, causes the computer to execute corresponding processes implemented by the second device in each of methods in the embodiments of the disclosure. For brevity, details will not be repeated herein again.

Those of ordinary skilled in the art may appreciate that the units and algorithmic operations of each of the examples described in the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, and such implementations shall not be considered as going beyond the scope of the disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, may be located in one place or be distributed to multiple network units. Part or all of the units may be selected based on the actual needs to achieve the purpose of the solution of the present embodiment.

Moreover, various functional units in the embodiments of the disclosure may be integrated into one processing unit, or they may be physically exist separately as individual units, or two or more units may be integrated into one unit.

The functions may be stored in a computer readable storage medium if implemented in the form of software functional units and sold or used as a stand-alone product. Based on such understanding, the essential part of the technical solutions of the disclosure or a part of the technical solutions that makes contributions over the related art or the part of the technical solutions may be embodied in a form of a software product. The computer software product is stored in a storage medium and includes instructions which cause a computer device (which may be a personal computer, a server, or a network device, etc.) to perform all or part of the operations in the methods described in various embodiments of the disclosure. The foregoing storage medium includes various media capable of storing program codes, such as a USB disk, a mobile hard disk, an ROM, an RAM, a magnetic disk, an optical disk, or the like.

The foregoing are only the specific implementations of the disclosure, however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

1. A method for information indication, comprising:
receiving, by a first device, an uplink signal from a second device, wherein the uplink signal carries first information, the first information indicates related information of uplink transmission performed by the second device and/or related information of downlink transmission performed by the first device, and the second device is an ambient communication device.

2. The method of claim 1, wherein the first information comprises at least one of:
first indication information for indicating a first time interval, wherein the first time interval is a time interval between a timing of a next uplink transmission performed by the second device and a timing of a current uplink transmission performed by the second device, or the first time interval is a time interval between a timing of sending a next trigger signal by the first device and a timing of sending a current trigger signal by the first device, and the trigger signal is used to trigger an uplink transmission of the second device;
second indication information for indicating that the second device has entered a sleep state and/or has not entered a sleep state;
third indication information for indicating that the second device has an uplink transmission to be sent and/or has no uplink transmission to be sent;
fourth indication information used to request an energy supply signal; or
fifth indication information for indicating first orientation information, wherein the first orientation information is orientation information where the second device is located and/or orientation information of the first device when performing a downlink transmission to the second device.

3. The method of claim 2, wherein a time duration corresponding to the first time interval is a time duration of a first timer, and the method further comprises:
starting, by the first device, the first timer after acquiring the first indication information;
and
sending, by the first device, a trigger signal to the second device after the first timer expires.

4. The method of claim 3, wherein sending, by the first device, the trigger signal to the second device after the first timer expires comprises:
after the first timer expires, and when the second indication information indicates that the second device has not entered the sleep state and/or the third indication information indicates that the second device has an uplink transmission to be sent, sending, by the first device, the trigger signal to the second device.

5. The method of any one of claims 2 to 4, further comprising:
after acquiring the fourth indication information, sending, by the first device, the energy supply signal, or triggering, by the first device, the third device to send the energy supply signal, wherein the energy supply signal is used to supply energy to the second device.

6. The method of any one of claims 2 to 5, further comprising:
sending, by the first device, a downlink signal to the second device based on the first orientation information indicated by the fifth indication information.

7. The method of claim 6, wherein the downlink signal comprises at least one of: a trigger signal, an energy supply signal, or downlink data.

8. The method of any one of claims 2 to 7, further comprising:
sending, by the first device, a first frame, wherein the first frame carries orientation information corresponding to a transmission direction of the first frame.

9. The method of claim 8, wherein the first frame is a beacon frame.

10. The method of any one of claims 2 to 8, wherein the orientation information is a beam index.

11. The method of any one of claims 1 to 10, wherein the first information is carried in a media access control (MAC) header or a physical layer protocol data unit (PPDU) header or a media access control control element (MAC CE) of the uplink signal.

12. The method of any one of claims 1 to 11, wherein
the first device is an access point (AP), and the second device is a station (STA); and/or
the first device is a network device, and the second device is a terminal device.

13. A method for information indication, comprising:
sending, by a second device, an uplink signal to a first device, wherein the uplink signal carries first information, the first information indicates related information of uplink transmission performed by the second device and/or related information of downlink transmission performed by the first device, and the second device is an ambient communication device.

14. The method of claim 13, wherein the first information comprises at least one of:
first indication information for indicating a first time interval, wherein the first time interval is a time interval between a timing of a next uplink transmission performed by the second device and a timing of a current uplink transmission performed by the second device, or the first time interval is a time interval between a timing of sending a next trigger signal by the first device and a timing of sending a current trigger signal by the first device, and the trigger signal is used to trigger an uplink transmission of the second device;
second indication information for indicating that the second device has entered a sleep state and/or has not entered a sleep state;
third indication information for indicating that the second device has an uplink transmission to be sent and/or has no uplink transmission to be sent;
fourth indication information used to request an energy supply signal; or
fifth indication information for indicating first orientation information, wherein the first orientation information is orientation information where the second device is located and/or orientation information of the first device when performing a downlink transmission to the second device.

15. The method of claim 14, further comprising:
receiving, by the second device, a first frame from the first device, wherein the first frame carries orientation information corresponding to a transmission direction of the first frame;
determining, by the second device, the first orientation information based on the orientation information corresponding to the transmission direction of the first frame.

16. The method of claim 15, wherein the first frame is a beacon frame.

17. The method of any one of claims 14 to 16, wherein the orientation information is a beam index.

18. The method of any one of claims 13 to 17, wherein the first information is carried in a media access control (MAC) header or a physical layer protocol data unit (PPDU) header or a media access control control element (MAC CE) of the uplink signal.

19. The method of any one of claims 13 to 18, wherein
the first device is an access point (AP), and the second device is a station (STA); and/or
the first device is a network device, and the second device is a terminal device.

20. An apparatus for information indication, applied to a first device, the apparatus comprising:
a receiving unit, configured to receive an uplink signal from a second device, wherein the uplink signal carries first information, the first information indicates related information of uplink transmission performed by the second device and/or related information of downlink transmission performed by the first device, and the second device is an ambient communication device.

21. An apparatus for information indication, applied to a second device, the apparatus comprising:
a sending unit, configured to send an uplink signal to a first device, wherein the uplink signal carries first information, the first information indicates related information of uplink transmission performed by the second device and/or related information of downlink transmission performed by the first device, and the second device is an ambient communication device.

22. A communication device, comprising: a processor, and a memory for storing a computer program, wherein the processor is configured to invoke and execute the computer program stored in the memory to cause the terminal device to perform the method of any one of claims 1 to 12 or the method of any one of claims 13 to 19.

23. A chip, comprising a processor configured to invoke and execute a computer program from a memory, to cause a device on which the chip is mounted to perform the method of any one of claims 1 to 12 or the method of any one of claims 13 to 19.

24. A computer-readable storage medium having stored thereon a computer program that, when executed by a computer, causes the computer to perform the method of any one of claims 1 to 12 or the method of any one of claims 13 to 19.

25. A computer program product having stored therein computer program instructions that, when executed by a computer, cause the computer to perform the method of any one of claims 1 to 12 or the method of any one of claims 13 to 19.

26. A computer program that, when executed by a computer, causes the computer to perform the method of any one of claims 1 to 12 or the method of any one of claims 13 to 19.
